# EUROPEAN PATENT APPLICATION

(11) **EP 4 089 846 A1**
(43) Date of publication of application: **16.11.2022**
(21) Application number: 22166023.6
(22) Date of filing: 31.03.2022
(51) Int. Cl.: H01R 13/11, H01R 13/20, H01R 13/187

(54) **VIBRATION-PROOF ELECTRICAL HIGH-CURRENT FLAT SOCKET CONTACT DEVICE**

(30) Priority: 12.05.2021 DE 102021112425
(71) Applicant: TE Connectivity Germany GmbH, 64625 Bensheim (DE)
(72) Inventor: CARVALHO, Caio, 64625 Bensheim (IT); SCHEER, Kevin, 64625 Bensheim (DE); ULRICH, Harald, 64625 Bensheim (DE); SCHAEFER, Maik, 64625 Bensheim (DE); MASAK, Stefan, 64625 Bensheim (DE); STANGE, Holger, 64625 Bensheim (DE)
(74) Representative: Patentanwaltskanzlei WILHELM & BECK

(57) **Abstract**

The invention relates to a vibration-proof electrical high-current flat socket contact device (1) for an electrical high-current connection for a vehicle, in particular a vehicle having an electric traction motor, comprising a mainly cuboidal contact chamber (110) into which a mainly cuboidal tab contact (510) can be inserted for electrically contacting the flat socket contact device (1), wherein a plurality of electrical contact springs (210) for electrically contacting and, separately therefrom, a mechanical retaining spring (30) for mechanically retaining the tab contact (510) are arranged in the contact chamber (110).

## Description

The invention relates to a vibration-proof electrical high-current flat socket contact device for an electrical high-current connection for a vehicle, in particular a vehicle having an electric traction motor. The invention further relates to a vibration-proof electrical high-current connector, a vibration-proof electrical high-current connection and an electrical entity, in each case for a vehicle, in particular in each case a vehicle having an electric traction motor.

In the electrical sector (electronics, electrical engineering, electrics, electrical energy technology etc.), a large number of electrical connector means or connector devices, socket connectors, pin connectors and/or hybrid connectors etc. - referred to below as (electrical) connectors (also: mating connectors) - are known which serve to transmit electrical currents, voltages, signals and/or data with a wide range of currents, voltages, frequencies and/or data rates. In low-, medium- and high-voltage and/or low- , medium- and high-current contexts, and in particular in the automotive sector, such connectors have to ensure transmission of electrical power, signals and/or data permanently, repeatedly and/or after a comparatively long period of inactivity for a short time in mechanically stressed, warm, possibly hot, contaminated, damp and/or chemically aggressive environments. Due to a wide range of applications, a large number of specially designed connectors are known.

Such a connector and, if applicable, its associated housing (for example in the case of a connector means or a connector device) or higher-level housing (for example in the case of a connector device) can be attached to an electrical wire, a cable, a cable harness, etc. - referred to below as a pre-assembled (electrical) cable (also: electrical entity) - or at/in an electrical device or means, such as for example at/in a housing, at/on a leadframe, at/on a circuit board etc., of a (power-)electrical, electrooptical or electronic component or a corresponding aggregation etc. (electrical entity).

If a connector (with/without a housing) is situated on a cable, a wire or a cable harness, this is also called a flying (plug-in) connector or a plug, a socket or a coupling; if it is situated at/in an electrical, electrooptical or electronic component, aggregation etc., this is also called a connector device, such as for example a (built-in/mounted) connector, a (built-in/mounted) plug or a (built-in/mounted) socket. Furthermore, a connector at such a device is often referred to as a (plug) receptacle, pin header, pin strip or header. - In the context of electrical power engineering (generating, converting, storing and transporting high-voltage electrical current within electricity grids, preferably with three-phase high-voltage transmission), one speaks here of cable fittings because of their comparatively complex structure.

Such a connector has to ensure proper transmission of electricity, wherein mutually corresponding and partially complementary connectors (connector and mating connector) usually have locking devices and/or fastening devices for permanent but usually releasable locking and/or fastening of the connector at/in the mating connector or vice versa. - Furthermore, an electrical connecting device for a connector, for example comprising or at least having: an actual contact means (terminal; usually formed materially in one piece or integrally, for example a (crimp) contact element etc.) or contact device (terminal; usually formed in one piece and from several or two parts, or materially in one piece, for example a (crimp) contact device), has to be held securely therein.

Efforts are continually being made to improve electrical connectors and their terminals, in particular to design them more effectively and to design and/or to produce them at lower cost. Compliance with vibration requirements (LV 214: class or degree of severity: 2, 3 and/or 4) for electrical high-current connections often fails, on account of the comparatively heavy terminals for high-current connections, due to an increased relative movement between the terminals (here: a tab contact means and a flat socket contact device) caused as a result. - It is an object of the invention to specify a vibration-proof electrical high-current connection for a vehicle, in particular a vehicle having an electric traction motor.

The object of the invention is achieved by means of a vibration-proof electrical high-current flat socket contact device for an electrical high-current connection for a vehicle, in particular a vehicle having an electric traction motor; by means of a vibration-proof electrical high-current connector for a vehicle, in particular a vehicle having an electric traction motor; by means of a vibration-proof electrical high-current connection for a vehicle, in particular a vehicle having an electric traction motor; and by means of an electrical entity for a vehicle, in particular a vehicle having an electric traction motor. - Advantageous developments, additional features and/or advantages of the invention can be found in the dependent claims and the following description.

The flat socket contact device according to the invention has a mainly or substantially cuboidal contact chamber into which a mainly or substantially cuboidal tab contact can be inserted for electrically contacting the flat socket contact device, wherein a plurality of electrical contact springs for electrically contacting the tab contact and, separately therefrom, at least or exactly one mechanical retaining spring for mechanically retaining the tab contact against vibrations of the tab contact are arranged in the contact chamber. - In this case, the tab contact is associated for example with a vibration-proof electrical high-current tab contact means.

The invention discloses a solution for preventing loss of electrical contacting in an electromechanical high-current (plug-in) connection, wherein the flat design thereof is further advantageous. Since an additional or separate retaining spring is implemented in addition to the contact springs, the retaining spring can be designed especially for retaining purposes and the electrical contact springs can be designed especially for electrically contacting the tab contact. There is no need to take into consideration a design of the retaining spring for electrically contacting and/or the electrical contact springs for retaining the tab contact.

According to the invention, the objects of electrically contacting (a plurality of electrical or electromechanical contact springs) and mechanically retaining (at least one mechanical or mechanical-electrical retaining spring) the tab contact means with the tab contact in the flat socket contact device are implemented separately from one another in the flat socket contact device. On account of similar partial solutions (electrical contact and mechanical contact) for both objects (electrical contacting and mechanical retaining), there is of course overlapping between the partial solutions in the case of the overall solution according to the invention.

Here, electrical or electromechanical is intended to mean that the plurality of (electrical) contact springs in a tab contact means inserted into the flat socket contact device primarily has an electrical functionality and only secondarily a mechanical functionality. Analogously, mechanical or mechanical-electrical is intended to mean that the at least one (mechanical) retaining spring in the tab contact means inserted into the flat socket contact device primarily has a mechanical functionality and only secondarily an electrical functionality or no electrical functionality. - For example, the retaining spring can be produced from an electrically conductive, poorly conductive or non-conductive material, without reducing an intended electrical suitability of an electrical connection comprising the flat socket contact device and the tab contact means or reducing it in such a way that it no longer exists.

The flat socket contact device can, preferably in accordance with LV 214, meet the vibration requirements of class or in accordance with degree of severity: 2, 3 and/or 4. In particular, the vibration requirement of class or in accordance with degree of severity 3 is met by means of the flat socket contact device. Furthermore, it may be possible for the flat socket contact device, preferably in accordance with LV 214, to not meet the vibration requirements of class or in accordance with degree of severity: 4 and/or higher. Furthermore, the flat socket contact device can be designed for electrical voltages of at least approximately: 200 V, 300 V, 400 V, 500 V, 600 V, 750 V, 1 kV, 1.25 kV or 1.5 kV, and/or for electrical currents of at least approximately: 200 A, 300 A, 400 A, 500 A, 600 A, 800 A, 1 kA or 1.25 kA. It is of course possible to design the flat socket contact device for voltages of below 200 V and/or currents of below 200 A.

The flat socket contact device is preferably designed for a use temperature of approximately -40°C to approximately: 120°C, 140°C, 150°C, 160°C, 170°C, 180°C, 190°C or 200°C. The flat socket contact device is further designed for copper cable cross sections of at least approximately: 16 mm², 25 mm², 35 mm², 50 mm², 70 mm², 95 mm², 120 mm², 150 mm² and 185mm² or more; aluminium cables may have to be converted. - These statements of course also apply to a mating terminal of the flat socket contact device, that is to say the tab contact means with the tab contact (see below).

The flat socket contact device can have a flat socket body. The flat socket body can comprise a socket portion and a connection portion at the socket portion. The socket portion preferably has two openings which are situated at a distance from one another in the longitudinal direction of the flat socket contact device and in a respective plane, the planes extending in the vertical direction and in the transverse direction of the flat socket contact device. The connection portion is designed for example as a transition portion or a further-contacting portion. The socket portion and/or the transition portion are/is preferably formed from a solid rectangular material layer.

The socket portion and/or the connection portion can be designed substantially as a solid material layer-portion without a substantial passage recess. The socket portion and/or the connection portion preferably have/has substantially or mainly the same thickness over approximately: 80%, 85%, 90%, 92.5%, 95%, 97.5%, 98%, 98.5% or 99% of their/its surface area. The front side of the flat socket body (that is to say as viewed in the direction in which the tab contact is plugged into the flat socket contact device) can have a substantially or mainly P-shaped cross section. That is to say, the flat socket body is designed as an angled flat socket body (electrical connection to the flat socket body is angled in relation to the plug-in direction of the tab contact). A 0° flat socket body (electrical connection to the flat socket body lies substantially in the plug-in direction of the tab contact) is of course possible.

The flat socket body can be bent into shape from a planar, solid, in particular rectangular, material layer. - The material layer (longitudinal extent in the transverse direction for the 90° flat socket body) can be bent back over itself, for example to form the flat socket body on a longitudinal end portion, in order to form the socket portion, wherein the socket portion is provided with an outer shape which corresponds (in a substantially cuboidal manner) to the inner contact chamber formed as a result. Here, the longitudinal end of this longitudinal end portion is bent over onto a central portion of the material layer and fastened to/on it, it being possible for this to be performed for example by means of partial penetration of the longitudinal end and the central portion. Here, the longitudinal end can additionally be caulked, riveted, welded, soldered and/or adhesively bonded to the central portion. It is of course possible to merely utilize welding, soldering or adhesive bonding of the longitudinal end to the central portion. - The material layer can be designed for example as a comparatively thick metal sheet (high current).

The electrical contact springs can be designed as inner boundaries of the contact chamber of the/a flat socket body of the flat socket contact device. Here, the electrical contact springs can be cut out of an inner wall of the flat socket body. As an alternative, the electrical contact springs can be arranged on an inner wall of the flat socket body in the contact chamber. The electrical contact springs can further be arranged at/in a tab contact receptacle which is arranged as a separate part of the flat socket contact device in the contact chamber.

The tab contact receptacle can be designed as at least one contact plate or at least one contact frame with electrical contact springs. Two contact plates or contact frames are preferred in each case. The tab contact receptacle can be designed as a contact spring cage comprising the electrical contact springs, which is open at the front, or at the front and at the rear in a plug-in direction. The front side of the contact spring cage can have a substantially flat o-shaped cross section.

The possibly respective contact plate, the possibly respective contact frame or the contact spring cage has at least one electrical contact spring (contact projection, contact spring arm, contact lamella) in a manner projecting inward, that is to say situated on the inside in the contact chamber of the flat socket body, on a (contact plate, contact frame) or at least one, in particular both, (contact spring cage) of the two large-surface-area sides. This is the case, in particular, on both large-surface-area sides. Here, an electrical contact spring can be configured as a contact spring arm on one side or as a contact lamella on two sides in the contact plate, the contact frame or the contact spring cage.

Before the flat socket body is bent into shape, the possibly respective contact plate or the possibly respective contact frame can be mounted, for example mechanically fastened, welded, soldered and/or adhesively bonded, on the later large-surface-area inner walls of the flat socket body. Depending on its design, the contact spring cage can be provided before (retaining device(s)) or after the flat socket body is bent into shape.

The contact plate, the contact frame or the contact spring cage can have at least one fastening device by means of which it can be secured to/in the contact chamber of the flat socket body in at least one longitudinal direction of the flat socket contact device. Here, the fastening device can be designed as a latching lug, a (spring) clamp, a latching hook or a clip with which the contact plate, the contact frame or the contact spring cage can be fastened to/in the contact chamber. - In particular, the at least one tab contact receptacle is fastened to/in the flat socket body and in the contact chamber with six degrees of rotational freedom and with at least five, preferably six, degrees of linear freedom.

The tab contact can be mechanically retained in the contact chamber by means of the mechanical retaining spring in at least one longitudinal direction or both longitudinal directions. The tab contact can further be mechanically retained in the contact chamber by means of the mechanical retaining spring in at least one transverse direction or both transverse directions. Furthermore, the tab contact can be electrically contacted (primary function) and can be mechanically retained (secondary function) in the contact chamber by means of the electrical contact springs in at least one vertical direction or both vertical directions.

The tab contact can be retained in the contact chamber by way of at least one of its two large-surface-area and/or narrow sides by means of the mechanical retaining spring. It is preferred that at least one of the two large-surface-area sides of the tab contact can be electrically contacted by means of the electrical contact springs, and that at least one of the two narrow sides of the tab contact can be mechanically retained by means of the mechanical retaining spring. It is preferred that each of these two sides of the tab contact can be electrically contacted and can be mechanically retained.

The tab contact can be clamped, locked and/or braced in the contact chamber by means of the mechanical retaining spring. The mechanical retaining spring can further be designed in particular as a clamping spring and preferably in the form of a clamp, a clasp, a claw or a cage. In particular, the mechanical retaining spring is fastened to/in the flat socket body and in the contact chamber with six degrees of rotational freedom and with at least five, preferably six, degrees of linear freedom.

The mechanical retaining spring can have at least one mechanical clamping spring arm which is arranged in the contact chamber for retaining the tab contact. A narrow or a large-surface-area side of the tab contact can be retained in the contact chamber by means of the mechanical clamping spring arm. The mechanical clamping spring arm for retaining the tab contact can have a clamping means, in particular an inwardly directed clamping projection. Analogously to the clamping means of the mechanical clamping spring arm, the tab contact has a preferably inwardly directed clamping means.

The at least one mechanical clamping spring arm can, together with the tab contact receptacle, form an insertion space for the tab contact. The at least one mechanical clamping spring arm can further be arranged in the tab contact receptacle and, together with the tab contact receptacle, form an insertion space for the tab contact. - The mechanical retaining spring can be designed as a mainly or substantially u-shaped clamping spring. The mechanical retaining spring can further have a base and two mechanical clamping spring arms which project away therefrom laterally and between which the tab contact can be clamped (in). The base can be designed as a resilient base which has the tendency to pull the mechanical clamping spring arms out of the contact chamber. Furthermore, the mechanical retaining spring, with its clamping spring arms at the front, can be inserted into the contact chamber, wherein the clamping spring arms extend along the narrow inner sides of the contact chamber or of the contact spring cage.

The mechanical retaining spring can be secured in the contact chamber in both longitudinal directions, for which reason the base preferably has a retaining device which projects away from it and can be seated on/at an edge of a first opening of the contact chamber. At least one clamping spring arm, at its free longitudinal end portion, can further be designed as a retaining device which is seated on/at an edge of a second opening of the contact chamber. In particular, both clamping spring arms each have such a retaining device. - By means of at least one analogous retaining device, the tab contact receptacle, for example as a contact spring cage, can be secured in the contact chamber in at least one, preferably in both, longitudinal directions. Here, the at least one retaining device of the tab contact receptacle is provided in a manner rotated through approximately 90° with respect to the at least one retaining device of the mechanical retaining spring.

The mechanical retaining spring is further designed, for example, as a vibration resistance spring, that is to say can be referred to as such. A single mechanical retaining spring is preferably arranged at/in the flat socket contact device. Furthermore, the flat socket body, the tab contact receptacle and/or the mechanical retaining spring can be formed in one piece, materially in one piece or in particular integrally.

A one-piece design is understood to mean a design of the flat socket body, the tab contact receptacle or the retaining spring in which the individual parts thereof are secured to one another in a non-positively and/or positively locking manner and preferably can be separated into the individual parts thereof again without damage. In the case of a multipartite design, a non-positively and/or positively locking connection (necessarily) is missing or a bond is established by means of a third part.

A materially (adhesively) one-piece design is understood to mean a design of the flat socket body, the tab contact receptacle or the retaining spring in which the individual parts thereof are secured to one another substance-to-substance (welded, soldered, adhesively bonded, laminated etc.) and preferably cannot be separated into the individual parts thereof without damage. In this case, the bond can further be produced by means of a non-positively and/or positively locking connection (not in the case of an integral design).

An integral design is understood to mean a design of the flat socket body, the tab contact receptacle or the retaining spring in which there is only one single component part, which can be separated only by being destroyed. The component part is manufactured from a single original piece (metal sheet, blank etc.) and/or from a single original mass (molten metal), which for its part is necessarily an integral part. An inner bond is made by means of adhesion and/or cohesion. - In all the embodiments, it is additionally possible to provide coating, deposition, galvanization etc.

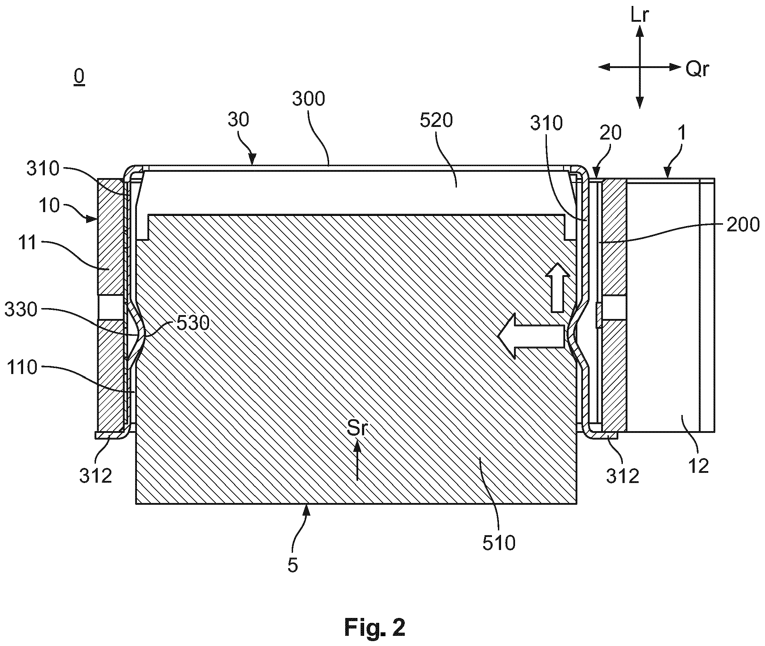

Since the additional, separate and preferably removable mechanical retaining spring is implemented in addition to the electrical contact springs, an inserted tab contact means or the tab contact thereof can be pulled further into the flat socket contact device in the plug-in direction (arrow pointing upward in Fig. 2) and/or retained there when vibrations are applied. Furthermore, the mechanical retaining spring preferably generates a clamping force perpendicular to the plug-in direction of the tab contact (arrow pointing to the left in Fig. 2) which further stabilizes or centres the tab contact in the flat socket contact device.

This is implemented, in particular, by way of the mechanical retaining spring being slid or snap-fitted into recesses which are provided, in particular punched or stamped, on the narrow sides of the tab contact (see below). The recesses and a spring geometry of the mechanical retaining spring are designed in such a way that sufficient axial and clamping forces are generated in order to retain the tab contact in a substantially or mainly stable position and therefore to considerably reduce relative movements between the tab contact and the flat socket contact device and possibly entirely or at least temporally entirely prevent said relative movements.

The connector according to the invention has a connector substrate and a flat socket contact device provided thereon/therein, wherein the flat socket contact device is designed according to the invention. Such a connector substrate can be designed for example as a (connector) housing, a retainer, a carrier, a circuit board etc.

The connection according to the invention comprises a flat socket contact device according to the invention and a vibration-proof electrical high-current tab contact means having a tab contact, wherein the tab contact is designed in a manner corresponding to the mechanical retaining spring of the flat socket contact device in such a way that the tab contact can be retained in the contact chamber of the flat socket contact device by the mechanical retaining spring.

Sides of the mechanical retaining spring and of the tab contact which relate to one another can be of complementary design at least in portions for this purpose. This can relate merely to a single pair of sides which relate to one another or in particular to two pairs of sides which relate to one another. More than two pairs of sides which relate to one another may possibly be utilized for example in a cage-like mechanical retaining spring.

The tab contact can, in a manner corresponding to the mechanical retaining spring, have at least one partially complementary clamping means. In this case, the clamping means can be configured as a lateral clamping recess in a large-surface-area and/or narrow side of the tab contact. The tab contact preferably has exactly or at least two clamping means which are preferably arranged at/in the tab contact on mutually opposite sides.

In a state in which the tab contact means is inserted into the flat socket contact device, the clamping means of at least one mechanical clamping spring arm of the mechanical retaining spring can retain the clamping means of the tab contact. Here, the clamping means of the mechanical clamping spring arm can engage into the clamping means of the tab contact in a retaining manner, or vice versa. This preferably relates to exactly two mechanical clamping spring arms; more than two mechanical clamping spring arms may possibly be utilized.

In the state in which the tab contact means is inserted, at least one locking projection of the tab contact can further be seated on/at an outer edge of an opening of the contact chamber. With preference, at least two locking projections arranged on mutually opposite sides of the tab contact are seated on/at an encircling outer edge of the opening of the contact chamber. Here, in each case at least one, in particular in each case two, such locking projections are arranged in particular on the large-surface-area sides of the tab contact. A locking projection can be arranged for example as a corrugation in the tab contact.

Here, a position of the at least one locking projection can be selected in such a way that it subjects a retaining arrangement of the tab contact to slight mechanical tension by means of the mechanical retaining spring in the flat socket contact device and thereby mounts the tab contact in the contact chamber substantially without play in the plug-in and mating plug-in direction of the tab contact into the flat socket contact device.

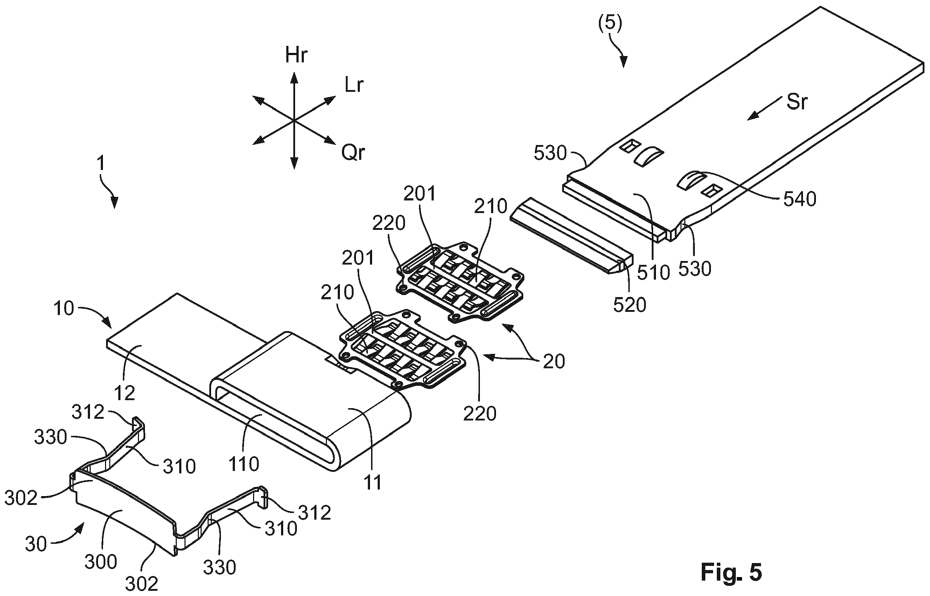

A clamping means of a mechanical clamping spring arm and a respective clamping means of the tab contact can be mutually designed in such a way that, when vibrations are applied to the electrical connection, the tab contact has the tendency to move further into the contact chamber. This can be implemented for example as follows. In the case of an inwardly directed clamping projection of the mechanical clamping spring arm which is arranged in the tab contact with mirror-image symmetry with respect to a transverse direction of the tab contact (that is to say it can be mapped onto itself); a front edge of a clamping recess of the tab contact can be configured to be steeper in the tab contact than a rear edge of the clamping recess in the tab contact (cf. Fig. 5).

The tab contact is preferably designed substantially as a solid material layer-portion without a passage recess. In this case, the tab contact preferably has, apart from the clamping means, mainly or substantially the same thickness over approximately: 90%, 95%, 97.5%, 98%, 98.5%, 99%, 99.5% or substantially 100% of its surface area.

The entity according to the invention comprises an electrical device and a flat socket contact device, a connector and/or a connection, wherein the flat socket contact device, the connector and/or the connection are/is designed according to the invention. - Such an entity can be configured, for example, as an electrical means, an electrical device, an assembled electrical cable, an electrical assembly, an electrical printed circuit board, an electrical component, an electrical module, an electrical appliance, an electrical instrument, an electrical unit, an electrical installation, an electrical system etc.

A vehicle - in particular a motor vehicle (road vehicle), but also: rail vehicle, watercraft and/or aircraft - having an electric traction motor is understood to mean a motorized vehicle which, in addition to an electric traction motor, can have a further non-electric drive, such as an internal combustion engine for example. That is to say, a vehicle having an electric traction motor can be understood to mean, for example, a hybrid electric vehicle, an electric vehicle (solely electromotive drive), a fuel cell vehicle etc.

The invention is explained in greater detail below on the basis of exemplary embodiments with reference to the appended drawing which is diagrammatic and not to scale. Portions, elements, component parts, units, components and/or patterns which have an identical, unique or analogous configuration and/or function are identified by the same reference signs in the description of the figures (see below), the list of reference signs, the patent claims and in the figures (Figs) of the drawing. A possible alternative which is not explained in the description of the invention (see above), is not shown in the drawing and/or is not definitive, a static and/or kinematic reversal, a combination etc. with respect to the exemplary embodiments of the invention or a component, a pattern, a unit, a component part, an element or a portion thereof, can further be gathered from the list of reference signs and/or the description of the figures.

In the case of the invention, a feature (portion, element, component part, unit, component, function, variable etc.) can be of positive configuration, that is to say present, or of negative configuration, that is to say absent. In this specification (description (description of the invention (see above), description of the figures (see below)), list of reference signs, patent claims, drawing), a negative feature is not explained explicitly as a feature if value is not placed on it being absent according to the invention. That is to say, the invention which is actually created, and not one constructed by the prior art, consists in omitting the said feature.

A feature of this specification can be utilized not only in a specified manner and/or way, but rather also in another manner and/or way (isolation, combination, replacement, addition, on its own, omission, etc.). It is possible, in particular, in the description, the list of reference signs, the patent claims and/or the drawing, to replace, add or omit a feature in the patent claims and/or the description on the basis of a reference sign and a feature which is assigned to it, or vice versa. Furthermore, a feature in a patent claim can be interpreted and/or specified in greater detail as a result.

The features of the description can also be interpreted as optional features (in view of the (initially mostly unknown) prior art); that is to say, each feature can be considered to be an optional, arbitrary or preferred feature, that is to say a feature which is not mandatory. Therefore, a separation of a feature, possibly including its periphery, from an exemplary embodiment is possible, it then being possible for the said feature to be transferred to a generalized inventive concept. The absence of a feature (negative feature) in an exemplary embodiment shows that the feature is optional in relation to the invention. Furthermore, in the case of a type term for a feature, a generic term for the feature can also be implicitly understood (possibly further hierarchical breakdown into subgenus, etc.), as a result of which a generalization of the feature is possible, for example with consideration of equivalent effect and/or equivalence.

In the merely exemplary figures (Figs):

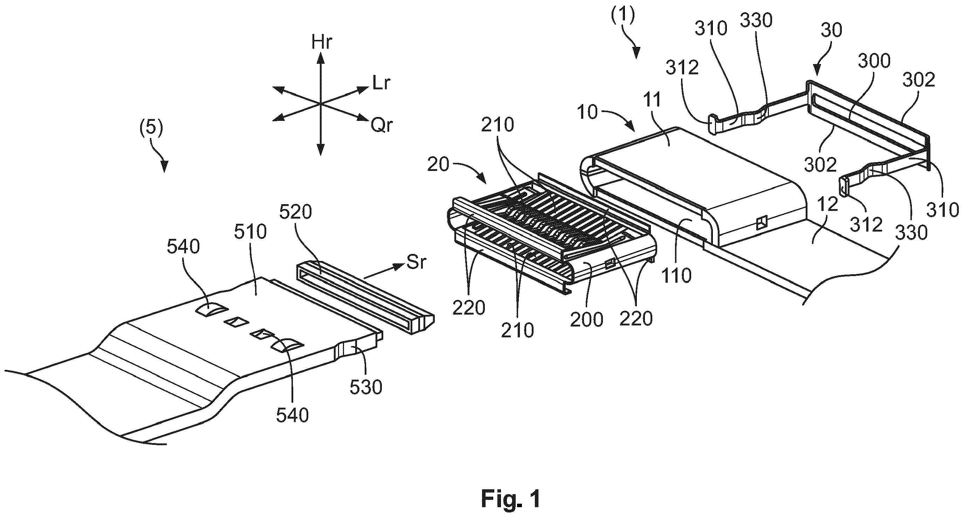

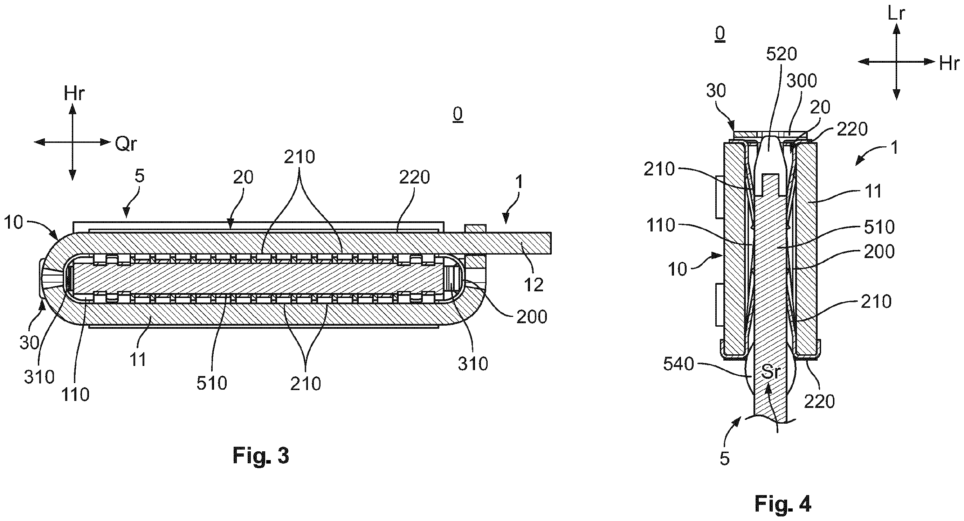

Figs 1 to 4 show a perspective exploded view (Fig. 1), a sectioned plan view (Fig. 2), a front-side view (Fig. 3) and a side view (Fig. 4) of an embodiment of a vibration-proof electrical high-current connection according to the invention comprising a flat socket contact device and a tab contact means, and
Fig. 5 shows a perspective exploded view of a second embodiment of the vibration-proof electrical high-current flat socket contact device according to the invention, the vibration-proof electrical high-current tab contact means according to the invention and the connection according to the invention.

The invention is explained in more detail below on the basis of exemplary embodiments of two embodiments (Figs 1-4 and Fig. 5) of a variant of a vibration-proof electrical high-current connection 0 (referred to below merely as connection 0) comprising a vibration-proof high-current flat socket contact device 1 (referred to below merely as flat socket contact device 1) and a vibration-proof high-current tab contact means 5 (referred to below merely as tab contact means 5) for a vehicle, in particular a vehicle having an electric traction motor. Two embodiments of the flat socket contact device 1 and of the tab contact means 5 are illustrated here. Although the invention is described and illustrated further in greater detail by way of preferred exemplary embodiments, the invention is not restricted by way of the disclosed exemplary embodiments, but rather is of more fundamental nature.

Other variations can be derived therefrom and/or from the above (description of the invention), without departing from the scope of protection of the invention. The invention can be used in general in the electrical sector in the case of an electrical entity (cf. above). One exception is formed here by terrestrial electrical power engineering. The drawing shows only those spatial portions of the subject matter of the invention which are necessary for understanding of the invention. Designations such as connector and mating connector, terminal (cf. above) and mating terminal etc. are to be interpreted synonymously, that is to say may be mutually interchangeable. - The explanation of the invention on the basis of the drawing relates below to a longitudinal direction Lr (a selection thereof is the plug-in direction Sr), a transverse direction Qr and a vertical direction Hr of the connection 0 according to the invention.

Figs 1 to 5 each show the tab contact means 5 and the flat socket contact device 1, wherein a free longitudinal end portion of the tab contact means 5 can be inserted or is inserted (connection 0) into a contact chamber 110 of the flat socket contact device 1. In the contact chamber 110, firstly a plurality of electrical contact springs 210 contacts the tab contact means 5 and, separately therefrom, secondly at least one mechanical retaining spring 30 retains the tab contact means 5 in the contact chamber 110. The plurality of electrical contact springs 210 are used to transmit high electrical currents at high electrical voltages and the at least one mechanical retaining spring 30 retains the tab contact means 5 securely in the contact chamber 110 even when vibrations are applied.

Here, the tab contact means 5 comprises a mainly or substantially cuboidal tab contact 510 and an electrically insulating touch protection means 520 at a front free end. A connection portion (transition portion, electrical further contacting etc.), situated on the other side of the tab contact 510, of the tab contact means 5 is no longer shown. The tab contact means 5 can of course also have a different design to the designs shown. Here, the tab contact means 5 can be arranged in a housing, not illustrated, of a plug-in tab contact connector (in a flying, built-in, mounted etc. manner). - The tab contact means 5 can of course also have a different design to the designs shown.

In order to be mechanically retained in the contact chamber 110, the tab contact 510 has at least one clamping means, in particular two clamping means, 530 which can interact with a clamping means 330, in particular two clamping means 330, of the flat socket contact device 1 in the contact chamber 110 in such a way that the tab contact 510 can be retained in the contact chamber 110 even under vibration loading in this way. Here, the respective clamping means 530 are designed in particular as clamping recesses 530 which are arranged in the narrow longitudinal sides of the tab contact 510. - It is of course also possible as an alternative or in addition to arrange the at least one clamping means, in particular the two clamping means, 530 at/in the large-surface-area sides of the tab contact 510.

The tab contact 510 can, on at least one side, in particular a large-surface-area side, have at least one locking projection 540 which can be seated on/at an outer edge of an opening of the contact chamber 110 on the outside of the flat socket body 10 or on the outside of a retaining device 220 of the tab contact receptacle 20 (cf. below) in the connection 0 and in this way stabilize the tab contact 510 on the flat socket body 10 (cf. Fig. 4). The tab contact 510 preferably has, on the respective side, two such locking projections 540 which are situated next to one another in the transverse direction Qr. Furthermore, the tab contact 510 has, in particular on each of two mutually opposite sides, in particular large-surface-area sides thereof, at least one, in particular two, such locking projections 540. The respective locking projection 540 can be designed as a corrugation 540 (cf. Fig. 1 together with Fig. 5).

Here, the flat socket contact device 1 comprises a flat socket body 10, an inner tab contact receptacle 20 and a mechanical or mechanical-electrical retaining spring 30 (cf. above as well). A connection portion (transition portion, electrical further contacting etc.) situated further on the other side of a socket region of the flat socket contact device 1, in the present case of the flat socket body 10, is no longer shown. Here, the flat socket contact device 1 can be arranged in a housing, not illustrated, of a (plug-in) socket connector (in a flying, installed, mounted etc. manner). - The flat socket contact device 1 can of course also have a different design to the designs shown.

The flat socket body 10 has a socket portion 11 with the preferably mainly or substantially cuboidal contact chamber 110 and has a connection portion 12, preferably integrally adjoining the socket portion 11 in the transverse direction Qr, for further power-electrical contacting of the flat socket contact device 1. The flat socket body 10 has, in a front side view thereof, a substantially P-shaped cross section, that is to say the flat socket body 10 is designed as an angled flat socket body 10 (plug-in direction and direction of further contacting do not lie in a line). - The flat socket body 10 can of course also have a different design to the designs shown; for example, the flat socket body 10 can be designed as a 0° flat socket body, a crimpable flat socket body 10 etc.

The tab contact receptacle 20 is arranged on the inside of the contact chamber 110 of the flat socket body 10 and has, for electrically contacting the tab contact 510, a large number of electrical or electromechanical contact springs 210 which are preferably designed, for example, as contact projections 210, contact spring arms 210 or contact lamellae 210. The contact springs 210 preferably extend in the longitudinal direction Lr. The contact springs 210 can of course also have a different design to the designs shown; for example, the contact springs 210 can for example not run exclusively in the longitudinal direction Lr, not all be of substantially identical design, be designed in accordance with the local current-carrying capacity thereof etc.

The tab contact receptacle 20 of Figs 1 to 4 is designed as a substantially flat contact spring cage 20 which is open at the front and at the rear and comprises the electrical contact springs 210. The contact spring cage 20 comprises a receiving body 200 with an elongated (flat design of the contact spring cage 20) o-shaped cross section into the interior of which the tab contact 510 can be inserted. In particular, the electrical contact springs 210 are provided, designed or arranged at/in the large-surface-area sides of the contact spring cage 20 and project or extend inward into the contact spring cage 20 or the contact chamber 110. - The tab contact receptacle 20 or the contact spring cage 20 can of course also have a different design to the designs shown.

The contact spring cage 20 is mounted within the contact chamber 110 of the flat socket body 10, for which reason the contact spring cage 20 has at least one retaining device 220 which is designed in particular as a bent-over retaining lug 220. The contact spring cage 20 preferably has at least one such retaining device 220 at each of its two ends in the longitudinal direction Lr. -Here, a retaining device 220 can be provided at a narrow and/or a long (Figs 1 and 4) longitudinal end of the retaining device 220. In the state in which the contact spring cage 20 is mounted in the contact chamber 110, the retaining device 220 is seated on/at the outside of an opening of the contact chamber 110 and in this way retains the contact spring cage 20 in the contact chamber 110 in a longitudinal direction Lr.

The tab contact receptacle 20 of Fig. 5 comprises two contact plates 20 or contact frames 20, wherein a single contact plate or a single contact frame has a receiving body 201 of substantially plate-like or frame-like design. The respective contact plate or the respective contact frame is provided on a large-surface-area inner wall of the flat socket body 10 within the contact chamber 110. The electrical contact springs 210 are provided, designed or arranged at/in the respective contact plate or the respective contact frame and project or extend inward into the contact chamber 110. - The tab contact receptacle 20 or the contact plates 20 or the contact frames 20 can of course also have a different design to the designs shown.

In the present case, the mechanical or mechanical-electrical retaining spring 30 is designed as a u-shaped clamping spring 30 which can be inserted into the contact chamber 110 (Figs 1 to 5) and possibly additionally also into the tab contact receptacle 20 (Figs 1 to 4) in the longitudinal direction Lr. - The mechanical retaining spring 30 can of course also have a different design to the designs shown; for example, the mechanical retaining spring 30 can be in the form of a claw, in the form of a clasp or in the form of a cage; can be designed with just one single mechanical clamping spring arm or more than two mechanical clamping spring arms 310 (cf. below), a different locking device than a mechanical clamping spring arm 310 (cf. below), a different retaining device 312 (cf. below) etc.; cf. above (that is to say the description of the invention).

The mechanical clamping spring 30 (cf. for example Figs 1 and 5) has a lug-like base 300 (crosspiece of the U-shape of the retaining spring 30) extending in the transverse direction Qr, a mechanical or mechanical-electrical clamping spring arm 310 extending away from each of the longitudinal ends of said base (limbs of the U-shape of the retaining spring 30). The base 300 further extends, together with at least one, in particular two, retaining devices 302, in the vertical direction Hr. Here, a retaining device 302 can be designed as a flat extension of the base 300, which flat extension is seated at the rear on an edge of the opening of the contact chamber 110 on the flat socket body 10 or on the retaining devices 220 of the tab contact receptacle 20 in the flat socket contact device 1 (cf. Figs 3 and 4).

In the state in which the mechanical clamping spring 30 is inserted into the contact chamber 110, the mechanical clamping spring arms 310 of said clamping spring extend on the inside of the contact chamber 110 laterally along the narrow side walls thereof. Here, a respective mechanical clamping spring arm 310 is arranged either directly adjacent to an inner wall of the contact spring cage 20 (Figs 1 to 4) or directly adjacent to a narrow inner wall of the flat socket body (Fig. 5) in the contact chamber 110.

The mechanical clamping spring arms 310 preferably extend through the contact chamber 110 and secure the mechanical clamping spring 30, on the other side of its base 300, in the contact chamber 110 in a longitudinal direction Lr by means of retaining devices 312. The retaining devices 302 of the base 300 and the retaining devices 312 of the mechanical clamping spring arms 310 preferably secure the mechanical clamping spring 30 in the contact chamber 110 in both longitudinal directions Lr.

A respective mechanical clamping spring arm 310 has, analogously to the respective clamping means 530, in particular to the respective clamping recess 530, of the tab contact 510, a clamping means 330, in particular an inwardly directed clamping projection 330. Here, the narrow, lug-like mechanical clamping spring arm 310 is preferably correspondingly bent, that is to say the clamping projection 330 is bent into the mechanical clamping spring arm 310.

With the connection 0 established (cf. Fig. 2), the clamping projections 330 of the mechanical clamping spring arms 310 engage into the respective clamping recesses 530 of the tab contact 510 and securely retain these in the contact chamber 110 even when vibrations are applied since the mechanical clamping spring 30 is preferably fastened in the contact chamber 110 in all translational and rotational directions. This can of course be arranged statically or kinematically in reverse. - The mechanical clamping spring 30 and/or the mechanical clamping spring arm or arms 310 can of course also have a different design to the designs shown.

The following statements can be applied to all embodiments of the invention. - According to the invention, the flat socket contact device 1 and the tab contact means 5 or the mechanical clamping spring 30 and the tab contact 510 can be mutually designed in such a way that, when the tab contact means 5 is plugged into the flat socket contact device 1, these two contact parts 30, 510 automatically move toward one another or pull together owing to the mechanical retaining spring 30 or clamping spring 30 (clamping means 530 snaps/slides into the clamping means 330 or vice versa) and therefore are partly independent of the flat socket body 10.

The mechanical retaining spring 30 or clamping spring 30 not only mechanically holds the flat socket contact device 1 and the tab contact means 5 together but rather pulls the tab contact 510 into the contact chamber 110 in a specific region in the process. The mechanical retaining spring 30 or clamping spring 30 can pull the tab contact 510 into the contact chamber 110 depending on the design, wherein there is a fixed contact point on the tab contact 510. Accordingly, the flat socket contact device 1 and the tab contact means 5 are seated fixedly against one another at least at this point.

It is further preferred that a free end of the tab contact means 5, that is to say for example the tab contact 510 or the contact protection means 520, is seated on/at the base 300 in a or exactly one region at/in the contact chamber 110. Here, the base 300 as a resilient base 300 is preferably designed in a bent manner (cf. Fig. 5, vertical direction Hr as bending axis) in such a way that a central region of the base 300 can be supported on an edge of an opening of the contact chamber 110 in such a way that as a result the at least one mechanical clamping spring arm 310 with its retaining device 312 is pulled against the edge of its opening of the contact chamber 110. As a result, the mechanical retaining spring 30 or clamping spring 30 can be accommodated in the contact chamber 110 with mechanical pretension in the longitudinal direction Lr.

Owing to this resilient base 300, the tab contact 510 can further likewise be accommodated in the contact chamber 110 with mechanical pretension in the longitudinal direction Lr. For this purpose, a first distance between the free longitudinal end of the tab contact means 5 (tab contact 510, touch protection means 520) and the at least one clamping means 530 of the tab contact 510 on the one hand and a second distance between the central region of the base 300 and the at least one clamping means 330 of the mechanical retaining spring 30 or clamping spring 30 on the other hand have to be correspondingly matched to one another. If these two distances are for example approximately the same or the first distance is for example somewhat greater than the second distance, the tab contact 510 can be automatically retained or clamped in the mechanical retaining spring 30 or clamping spring 30 by the mechanical retaining spring 30 or clamping spring 30.

In such a case, the mechanical retaining spring 30 or clamping spring 30 exerts a mechanical (compressive) pretension onto the tab contact means 5 between the free end thereof and the at least one clamping means 530 thereof by means of the bent and resilient base 300 and the at least one clamping means 330 thereof. At the same time, the mechanical retaining spring 30 or clamping spring 30, by means of the bent and resilient base 300 thereof and a retaining device 312 of the at least one clamping spring arm 310 thereof, can exert a (compressive) pretension onto the edges of the two openings of the contact chamber 110.

### List of reference signs

- 0: (Vibration-proof, electrical) (high-current) connection comprising a tab contact means 5 or an electrical connector to the tab contact means 5 and a flat socket contact device 1 or an electrical connector to the flat socket contact device 1
- 1: (Vibration-proof, electrical) (high-current) flat socket contact device
- 5: (Vibration-proof, electrical) (high-current) tab contact means

- 10: Flat socket body
- 11: Socket portion
- 12: Connection portion
- 110: Mainly or substantially cuboidal contact chamber

- 20: (Inner) tab contact receptacle; contact spring cage, contact plates, contact frames
- 200: Receiving body with a substantially flat o-shaped cross section
- 201: Receiving body of substantially plate-like or frame-like design
- 210: Electrical or electromechanical contact spring
- 220: Retaining device, in particular (bent-over) retaining lug

- 30: Mechanical or mechanical-electrical retaining spring, clamping spring
- 300: (Resilient) base
- 302: Retaining device, in particular extension of the base 300
- 310: Mechanical or mechanical-electrical clamping spring arm
- 312: Retaining device, in particular (bent-over) retaining lug
- 330: Clamping means, in particular inwardly directed clamping projection

- 510: Mainly or substantially cuboidal tab contact
- 520: Touch protection means
- 530: Clamping means, in particular clamping recess
- 540: Locking projection, in particular corrugation

- Lr: Longitudinal direction (undirected), longitudinal axis of the connection 0
- Sr: Plug-in direction (directed), parallel to the longitudinal axis
- Hr: Vertical direction (undirected), vertical axis of the connection 0
- Qr: Transverse direction (undirected), transverse axis of the connection 0

## Claims

1. Vibration-proof electrical high-current flat socket contact device (1) for an electrical high-current connection (0) for a vehicle, in particular a vehicle having an electric traction motor, comprising
a mainly cuboidal contact chamber (110) into which a mainly cuboidal tab contact (510) can be inserted for electrically contacting the flat socket contact device (1), **characterized in that**
a plurality of electrical contact springs (210) for electrically contacting and, separately therefrom, a mechanical retaining spring (30) for mechanically retaining the tab contact (510) are arranged in the contact chamber (110).

2. Electrical flat socket contact device (1) according to the preceding claim, **characterized in that** the flat socket contact device (1):
preferably in accordance with LV 214, meets the vibration requirements of class or in accordance with degree of severity: 2, 3 and/or 4,
is designed for electrical voltages of at least approximately: 200 V, 300 V, 400 V, 500 V, 600 V, 750 V, 1 kV, 1.25 kV or 1.5 kV, and/or
is designed for electrical currents of at least approximately: 200 A, 300 A, 400 A, 500 A, 600 A, 800 A, 1 kA or 1.25 kA.

3. Electrical flat socket contact device (1) according to one of the preceding claims, **characterized in that** the flat socket contact device (1) has a flat socket body (10), wherein:
the flat socket body (10) comprises a socket portion (11) and a connection portion (12) at the socket portion (11),
the socket portion (11) and/or the connection portion (12) are/is designed substantially as a solid material layer-portion without a substantial passage recess,
the front side of the flat socket body (10) has a substantially or mainly P-shaped cross section, and/or
the flat socket body (10) is bent into shape from a planar, solid, in particular rectangular, material layer.

4. Electrical flat socket contact device (1) according to one of the preceding claims, **characterized in that**:
the electrical contact springs (210) are designed as inner boundaries of the contact chamber (110) of the/a flat socket body (10) of the flat socket contact device (1), the electrical contact springs (210) are arranged at/in a tab contact receptacle (20) which is arranged as a separate part of the flat socket contact device (1) in the contact chamber (110),
the tab contact receptacle (20) is designed as at least one contact plate (20) or at least one contact frame (20) with electrical contact springs (210), and/or
the tab contact receptacle (20) is designed as a contact spring cage (20) comprising the electrical contact springs (210), which is open at the front, or at the front and at the rear in a plug-in direction (Sr).

5. Electrical flat socket contact device (1) according to one of the preceding claims, **characterized in that**:
the tab contact (510) can be retained in the contact chamber (110) by way of at least one of its two large-surface-area and/or narrow sides by means of the mechanical retaining spring (30),
the tab contact (510) can be clamped, locked and/or braced in the contact chamber (110) by means of the mechanical retaining spring (30), and/or
the mechanical retaining spring (30) is designed in particular as a clamping spring (30) and preferably in the form of a clamp, a clasp, a claw or a cage.

6. Electrical flat socket contact device (1) according to one of the preceding claims, **characterized in that**:
the mechanical retaining spring (30) has at least one mechanical clamping spring arm (310) which is arranged in the contact chamber (110) for holding the tab contact (510),
a narrow or a large-surface-area side of the tab contact (510) can be retained in the contact chamber (110) by means of the mechanical clamping spring arm (310), and/or
the mechanical clamping spring arm (310) for retaining the tab contact (510) has a clamping means (330), in particular an inwardly directed clamping projection (330).

7. Electrical flat socket contact device (1) according to one of the preceding claims, **characterized in that** the at least one mechanical clamping spring arm (310), together with the tab contact receptacle (20), forms an insertion space for the tab contact (510), or
the at least one mechanical clamping spring arm (310) is arranged in the tab contact receptacle (20) and, together with the tab contact receptacle (20), forms an insertion space for the tab contact (510).

8. Electrical flat socket contact device (1) according to one of the preceding claims, **characterized in that**:
the mechanical retaining spring (30) is designed as a mainly or substantially u-shaped clamping spring (30),
the mechanical retaining spring (30) has a base (300) and two mechanical clamping spring arms (310) which project away therefrom laterally and between which the tab contact (510) can be clamped,
the base (300) is designed as a resilient base (300) which has the tendency to pull the mechanical clamping spring arms (310) out of the contact chamber (110), and/or
the mechanical retaining spring (30), with its clamping spring arms (310) at the front, is inserted into the contact chamber (100) and the clamping spring arms (310) extend along the narrow inner sides of the contact chamber (100) or of the contact spring cage (20).

9. Electrical flat socket contact device (1) according to one of the preceding claims, **characterized in that** the mechanical retaining spring (30) is secured in the contact chamber (100) in both longitudinal directions (Lr), for which reason
the base (300) preferably has a retaining device (302) which projects away from it and is seated on/at an edge of a first opening of the contact chamber (100), and/or
at least one clamping spring arm (310), at its free longitudinal end portion, is designed as a retaining device (312) which is seated on/at an edge of a second opening of the contact chamber (100).

10. Vibration-proof electrical high-current connector for a vehicle, in particular a vehicle having an electric traction motor, wherein
the connector comprises a connector substrate and a flat socket contact device (1) provided thereon/therein, **characterized in that**
the flat socket contact device (1) is designed according to one of the preceding claims.

11. Vibration-proof electrical high-current connection (0) for a vehicle, in particular a vehicle having an electric traction motor, comprising
a flat socket contact device (1) according to one of the preceding claims and a vibration-proof electrical high-current tab contact means (5) having a tab contact (510), **characterized in that**
the tab contact (510) is designed in a manner corresponding to the mechanical retaining spring (30) of the flat socket contact device (1) in such a way that the tab contact (510) can be retained in the contact chamber (110) of the flat socket contact device (1) by the mechanical retaining spring (30).

12. Electrical connection (0) according to the preceding claim, **characterized in that**:
sides of the mechanical retaining spring (30) and of the tab contact (510) which relate to one another are of complementary design at least in portions,
the tab contact (510), in a manner corresponding to the mechanical retaining spring (30), has at least one partially complementary clamping means (530), and/or
the clamping means (530) is configured as a lateral clamping recess (530) in a large-surface-area and/or narrow side of the tab contact (510).

13. Electrical connection (0) according to one of the preceding claims, **characterized in that**, in a state in which the tab contact means (5) is inserted into the flat socket contact device (1):
the clamping means (330) of at least one mechanical clamping spring arm (310) of the mechanical retaining spring (30) retains the clamping means (530) of the tab contact (510),
at least one locking projection (540) of the tab contact (510) is seated at/on an outer edge of an opening of the contact chamber (110), and/or
the at least one locking projection (540) is configured as a corrugation in the tab contact (510).

14. Electrical connection (0) according to one of the preceding claims, **characterized in that** a clamping means (330) of a mechanical clamping spring arm (310) and a respective clamping means (330) of the tab contact (510) are mutually designed in such a way that, when vibrations are applied to the electrical connection (0), the tab contact (510) has the tendency to move further into the contact chamber (100).

15. Electrical entity for a vehicle, in particular a vehicle having an electric traction motor, wherein
the entity comprises an electrical device and a flat socket contact device (1), a connector and/or a connection (0), **characterized in that**
the flat socket contact device (1), the connector and/or the connection (0) are/is designed according to one of the preceding claims.
